Europäisches Patentamt

European Patent Office

Office européen des brevets

(11) Publication number: **0 240 340 B1**

## EUROPEAN PATENT SPECIFICATION

(45) Date of publication of patent specification: **30.09.92**

(51) Int. Cl.⁵: **C02F 11/08**, B01J 10/00, B01J 3/04, B01J 19/24

(21) Application number: **87302845.0**

(22) Date of filing: **01.04.87**

(54) Method and reaction apparatus for effecting controlled chemical reactions.

(30) Priority: **03.04.86 US 847965**
**20.01.87 US 4453**

(43) Date of publication of application:
**07.10.87 Bulletin 87/41**

(45) Publication of the grant of the patent:
**30.09.92 Bulletin 92/40**

(84) Designated Contracting States:
**AT BE CH DE ES FR GB IT LI LU NL SE**

(56) References cited:
**FR-A- 1 476 294**
**US-A- 3 844 948**
**US-A- 4 230 503**
**US-A- 4 272 383**
**US-A- 4 383 911**

(73) Proprietor: **WASTE TREATMENT PATENTS & RESEARCH N.V.**
**De Ruyterkade 58a P.O. Box 837**
**Willemstad Curacao(AN)**

(72) Inventor: **Binning, Jack Edward**
**1460 St.Andrews Drive**
**Broomfield, CO 80020(US)**
Inventor: **Peterscheck, Hermann Walter**
**2201 14th Avenue**
**Longmont, CO 80302(US)**
Inventor: **Ferraro, Francis Michael**
**11614 Ouivas Way**
**Westminster, CO 80234(US)**
Inventor: **Carlson, Franklin Berger**
**975 Flint Way**
**Broomfield, CO 80020(US)**

(74) Representative: **Wiegerink, Franciscus Johannes et al**
**Nederlandsch Octrooibureau Scheveningseweg 82 P.O. Box 29720**
**NL-2502 LS 's-Gravenhage(NL)**

# Description

The present invention relates generally to methods of and apparatus for producing chemical reactions. More specifically, this invention relates to such methods and apparatus for carrying out controlled chemical reactions including aqueous-phase oxidation reactions.

The chemical composition of a substance is subject to change under various conditions. These conditions may include the presence of a specific reactant, the concentration of the reactants, the temperature and pressure of the reactants and the nature of the reaction vessel. By precisely controlling the environment of a substance, a desired chemical reaction can be brought about at a preselected reaction rate to produce a particular product. Hence, the development of convenient, economical reaction schemes is an important goal of chemical processing technology.

Many oxidation reactions are induced in a liquid medium. One such reaction is aqueous-phase oxidation, or "wet oxidation". The wet oxidation of combustible matter requires a temperature high enough to produce ignition, substantial mixing to promote contacting of the reactants, and sufficient time for the wet oxidation reaction to occur. Wet oxidation of combustible matter is an exothermic reaction by which substantial quantities of heat are generated. In some processes, the heat liberated by the exothermic reaction is used to maintain the autogenous ignition temperature of the combustible materials. Thus, a wet oxidation process can be provided which is self-sustaining.

Wet oxidation of combustible matter has become an important reaction in the treatment of municipal waste. Various processing systems have been devised, most of which have achieved only limited success. One exception is the subterranean or "down-hole" wet oxidation of municipal sludge. United States Patent Specification No. 4,272,383 discloses the principles of the first known successful vertical-tube, down-hole reaction system for the wet oxidation of municipal waste. The waste treatment apparatus includes a reaction vessel which comprises an assembly of concentric pipes or tubes which extend vertically into the earth to a depth of approximately one mile. The assembly of tubes forms an influent passage through which diluted municipal waste is injected as an influent waste stream and an effluent passage. The injected waste is flowed into the reaction vessel to form a hydrostatic column which exerts substantial fluid pressure. The temperature of the influent waste stream may be increased by heating means as the stream flows into the reaction vessel. Compressed air is injected into the downflowing sludge waste stream, preferably forming Taylor-type gas bubbles.

At a depth of about 304.8 to 1828.8 metres (1,000 to 6,000 feet), a reaction zone is established at which the wet oxidation of the waste becomes self-sustaining, provided of course that the concentration of the reactants (combustible matter and oxygen) is sufficiently large. The temperature in the reaction zone is generally about 260 to 316°C (500 to 600°F). Boiling is inhibited by the fluid pressure exerted by the hydrostatic column. A heat-exchange jacket may be provided to remove or supply heat to the reaction zone. In the aforementioned U.S. patent, the temperature of the reaction is controlled by a heat exchanger jacket which surrounds the inner concentric pipes wherein heated oil or other heat exchange fluid is pumped into the jacket to control the temperature of the reaction zone. The process is usually continuous such that the municipal waste and the reaction products are always moving through the reaction vessel. Hence, the flow rate of the liquid waste must be controlled along with the concentration of the reactants to provide for substantially complete oxidation of combustible materials in the reaction zone. The reaction products then move through the effluent passage which is generally an annulus formed by the concentric tubes. As will be appreciated more fully hereinafter, it is the flow pattern of the reactants through the reaction vessel which determines in large part the degree of success of the waste processing system.

Known above-ground systems for wet oxidation of municipal waste have attained only limited success. Hence, for the most part they have not replaced waste processing methods such as sedimentation, dewatering, drying, incineration and the like. Conventional above ground systems are inefficient because of their large energy requirements, their inability to rapidly process waste and due to their incomplete oxidation of waste materials. Moreover, known above-ground systems are expensive to build, operate and maintain. See, for example, United States Patent Specifications Nos. 2,665,249 and 2,932,613.

The suitability of any continuous wet oxidation reaction apparatus or method for carrying out a continuous wet oxidation reaction of the type described is determined in part by the flow regime or flow pattern which it provides, including the residence times for both vapour and liquid portions, and the stability of the flow velocity. It would therefore be desirable to provide a method and apparatus in which a wet oxidation or similar reaction can be effected and which provides substantial mixing of the reactants to facilitate mass transfer. It would also be desirable to provide a method and apparatus for wet oxidation in which the relative residence times for both liquid and vapour portions supplement the reaction process. It would further be desirable to provide a method and apparatus for wet oxidation which produces a stable flow rate of reactants and products. The present invention seeks to provide a method and apparatus which achieves these and other goals.

The treatment apparatus of this invention seeks to provide a method and apparatus for effecting chemical reactions characterized by minimum initial capital costs, a relatively high overall thermodynamic efficiency, excellent containment and durability, and an overall simplicity of construction and operation with a minimum space requirement. Moreover, the present invention is intended to provide a novel ground surface method and apparatus for enhancing chemical reactions at high temperatures and pressures without the necessity of the customary large pressure vessels that require constant mechanical stirring and considerable land surface area. Further, the present invention attempts to solve a number of environmental, excessive energy, and maintenance problems presently associated with handling waste above ground.

The reaction system of the present invention for effecting accelerated chemical reactions includes as its basic component a non-segmented long tubular coil. An influent waste stream or other first reactant is directed through the tubular coil with a second reactant being added to the influent waste stream. The reaction system may be used for wet oxidation of a waste influent consisting of dilute organic waste with air or pure oxygen being injected into the waste stream.

According to the present invention there is provided a waste treatment apparatus characterised by:

(a) a containment vessel;

(b) a non-segmented long thin-walled tubular coil horizontally positioned in the containment vessel for flowing an influent fluid waste stream containing reactants therethrough at a selected flow rate to cause plug or slug flow of the influent fluid waste stream through the coil;

(c) the containment vessel being adapted to receive a heat exchange medium to control the temperature of the influent fluid waste stream containing reactants by adding heat to the fluid waste stream when the temperature of the fluid waste stream is below a predetermined temperature and remove heat from the fluid waste stream when the temperature of the fluid waste stream is above a predetermined temperature such that the reactants react in the tubular coil to form reaction products.

The present invention also provides a method of effecting waste processing reactions characterised by the steps of:

(a) flowing an influent fluid waste stream containing reactants through a non-segmented long thin-walled tubular coil horizontally positioned within a containment vessel, the step of flowing being controlled to provide a selected flow rate to cause plug or slug flow of the influent fluid waste stream through said coil;

(b) circulating a heat exchange medium through the containment vessel and in contact with the tubular coil;

(c) controlling the temperature of the fluid waste stream within the tubular coil by adding heat to the fluid waste stream when the temperature of the fluid waste is below a predetermined temperature and removing heat from the fluid waste stream when the temperature of the fluid waste is above a predetermined temperature wherein a chemical reaction of the reactants in the fluid waste stream occurs to form an effluent fluid stream containing reaction products.

In one embodiment, the tubular coil is positioned in a containment vessel which is partitioned to form a series of successive compartments which are filled with a heat exchange fluid. The fluid in each compartment can be adjusted to different levels relative to the tubular coil which is submerged within the fluid. Further, the heat exchange fluid can be heated to a start-up temperature which will permit a chemical reaction to occur in the waste stream within the tubular coil. Alternatively, heat may be extracted from the heat exchange fluid after the reaction within the tubular coil becomes autogenic.

When processing dilute organic waste, for example, in the reaction system of the present invention, the influent liquid waste stream is pumped to the tubular coil at a pressure of approximately 70.3 to 140.6 Kg/sq cm (1000 to 2000 psi) with a gas such as air or oxygen being added thereto. The gas and liquid flow rates are set to cause plug or slug slow of the two-phase waste stream through the tubular coil, thereby resulting in intimate mixing of the reactants. The reactants are heated within the coil to a temperature resulting in oxidation of the waste stream which is generally between 149°C and 316°C (300°F and 600°F). Thus, the reaction within the coil occurs under the combined conditions of high pressure, high temperature and two-phase plug flow in the waste stream. The reaction system of this invention is, however, particularly suitable for destruction of toxic and industrial wastes, such as chlorinated hydrocarbons, cyanides, organic and inorganic phenols, polyaromatic compounds, etc. It will be understood, however, that the reaction system of this invention may also be used to treat various chemical or solids suspended in a liquid where chemical oxidation reduction is not the principal object. The preferred temperature and pressure will, therefore, depend upon the intended reaction.

This system provides the advantage of a thin-walled reaction container, i.e., the tubular coil, which, because of its coiled length, provides the necessary residence time for the reactants in the reaction zone to permit the desired amount of oxidation. The high temperature and high pressure conditions required for the reaction are contained within the thin walled tubing, which is unexpected since reactions of this type have normally been conducted within thick wall pressure vessels. As described more fully below, the diameter of the tube in a typical installation may be about two inches having a wall thickness of about one-quarter inch, wherein the reaction proceeds at a temperature of about 316°C (600°F) at a pressure of about 140.6 Kg/sq.cm (2000 psi) and a flow rate of about 152.4 cms (five feet) per second. This feature substantially lowers capital costs for the equipment and the system may be made portable.

Further, the plug or slug flow of the reactants through the tubular coil provides improved chemical reactant mixing because the curvature of the coil tends to induce a secondary flow in the liquid such that the liquid tends to travel in a spiral on the inside surfaces of the coils thereby providing more intimate mixing with the gaseous phase. The curvature of the spiral tube induces secondary flow in the fluid in the form of a double spiral and the gas phase flows toward the "top" of the coil, wherein the gas slugs or plugs are drawn through the bottom of the coil, providing intimate and thorough mixing. Moreover, since the reaction container provided by the tubular coil is many times smaller in diameter as compared to known reaction vessels operating within the same pressure and temperature ranges, the performance of the oxidation process is improved since there is little possibility for the reactants to bypass the oxidation reaction and the improved containment of the reactants within the tubular coil minimizes the possibility of environmental problems.

The present invention also permits different temperature gradients to be applied to successive sections of the tubular coil across its length. In the compartmentalized embodiment of the containment vessel, the temperature of the heat exchange fluid in each compartment can be adjusted to provide a fine control of the rate of reaction occurring within each section of the tubular coil. Further, if a liquid heat exchange fluid is used, the level of the fluid in each compartment can be adjusted relative to the submerged coil which also affects the chemical reaction as a result of the gradient of external temperature acting upon the coil section in each compartment.

An alternative tube-in-tube design for the tubular coil permits the influent two phase waste stream to pass through the inner tube and return within the annulus formed between the outer periphery of the inner tube and the inner periphery of the outer concentric tube. This permits counter current heat exchange between the waste stream within the inner tube and the returning stream within the outer tube, and therefore, the heat exchange fluid within the containment vessel may not be necessary. This alternative design is especially applicable for processing reactants at or near the autogenic operating point where heat input or removal is not required. The concentration of the reactants may be preset such that a certain amount of chemical reaction and heat release occurs as the waste stream travels within the inner tube. The chemical reaction would continue as the reactants return in the annulus between the tubes and the heat of reaction would heat any subsequent incoming waste stream through the inner tube. Moreover, the tube-in-tube design permits a ramped time temperature reaction rate as compared to the more step function type of reaction rate provided by the compartmentalized containment vessel.

The use of a long tubular coil as a reaction container allows the inclusion of multiple reactant injection or extraction points along the path of the coil. Gas, liquid or solid reactants may be added at multiple points along the length of the tubular coil and gas, liquid or solids may be extracted at various points. Multiple injection points permit fresh reactants to be added when, for example, the temperature of the waste stream has been heated by the reaction. Extraction of gaseous or solid reaction products at intermediate points along the length of the tubular coil can, for example, allow the reduction of the waste stream velocity downstream of the extraction point thereby increasing the residence time of the remaining reactants.

The tubular coil, which is approximately 1.609 Kms (one mile) in length, provides an excellent environmental container for the reaction stream under high pressure and temperature to prevent its escape to the atmosphere. Further, the long tubular coil is extremely suitable for temperature control to permit continuous heat input, autogenic operation, and continuous heat extraction. The heat exchange fluid surrounding the tubular coil within the containment vessel may include vapor, liquid or gaseous heat exchange fluids. Moreover, the start-up heat that is required for providing the reaction temperature can be conveniently provided through direct steam injection into the tubular coil. The tubular coil and, more particularly, the tube in tube and the multiple injection point design permit autogenic operation without the need for heat input or extraction since the temperature control may be achieved by varying the concentration of the reactants.

In accordance with the present invention, there is also provided a reaction apparatus which includes in one embodiment a conduit in the shape of a serpentine tubular coil having generally "elliptical" or "oval" portions or loops, the sides of which are substantially vertical. The generally elliptical coil or serpentine string of the present invention is positioned such that the largest portion or diameter is vertical. That is, the major axis of the ellipse or serpentine string is in the vertical position. The shape of the reaction coil provides unexpected superior mass and heat transfer of reactants, reduces surging of the reactants through the reaction apparatus, improves mixing and provides optimal residence times for liquid and vapor phases of the reaction mixture and provides other advantages which will be understood more fully from the following description. The reaction system of the present invention is particularly suitable for wet oxidation of municipal waste which contains combustible matter, however, the method and apparatus of this invention may also be utilized for other chemical reactions.

By making the coil or section "elliptical", rather than circular, the substantially vertical downcomer portion of a down-hole, vertical reaction apparatus is more nearly approximated. In the vertical downcomer portion, the vapor phase, being the least dense component, resists the downward flow of the liquid phase, thus providing better mixing and contacting of the reactants. This resistance by the vapor phase to the downward flow of the liquid also increases the residence time of the vapor phase in the downcomer portion. The increased mixing of the reactants and the increased residence time of the vapor phase in the downcomer portion provide greater mass transfer between oxygen and the oxidizable waste components to provide a more efficient wet oxidation reaction. The upwardly extending or upcomer portions of the elliptical tubular have further benefits. The gaseous phase is rising in the upcomer portions at a faster rate than the liquid, and the solids are moving the slowest because of the influence of gravity. This results in better mixing and heat transfer, wherein the suspended solids "pulse" in the upcomer portions, under the influence of the bubbles of gas.

The sections of tubular through which the flow of the reactants is generally horizontal, that is, at the top and bottom bends of the "loops", are reduced. It is believed that the flow pattern of reactants through these generally horizontal sections lowers the efficiency of the system by causing greater stratification of liquid and vapor phases which reduces mass transfer rates and, which contributes to surging of the reactants through the system. Thus, the present invention further provides unexpected improvements in mass transfer characteristics of the system and in flow stability.

As used herein, "elliptical" refers the shape of the tubular reactor, whether or not the "ellipsoid" is closed or open. That is, the tubular reaction vessel includes generally vertically extending side portions, which define the upcomer and downcomer portions, and generally horizontal portions. The tubular may then be serpentine in form, or coil.

The conduit which forms the generally elliptical coil serpentine tubular of the present invention may include a single tube or, alternatively, comprise a generally concentric assembly of tubes defining a central bore or influent passage and a surrounding annulus or effluent passage. Generally concentric tubes have a further advantage in that the wall thickness of the inner tube may be relatively thin because of the small differential in pressure between the tubes, improving heat transfer. The "coil-strength" of the apparatus at the tube bends or curves increases its ability to withstand internal pressures produced during waste processing which may exceed 140.6 Kgs/sq.cm (2000 psi). Also, the curved sections of the reaction apparatus induce a secondary flow in the reactants which is believed to be in the form of a "double spiral". This secondary flow provides additional mixing of the reactants and thus further accelerates the wet oxidation reaction. As stated, the substantially vertical sections of the apparatus define influent downcomer portions and influent upcomer portions. Slug flow and plug flow patterns, which are desired in tube reactions, are attained in these vertical influent portions to a greater degree than in a circular coil apparatus.

This preferred embodiment of the present invention also may include a containment vessel in the nature of a heat-exchanger which partially or wholly encloses the elliptical coil reaction apparatus of the present invention. This containment vessel may also be partitioned into a series of chambers in which one or more loops of the reaction apparatus reside. The containment vessel may be supplied with a heat-exchange medium such as oil or water to conduct heat to or away from the contained sections reaction coil or a furnace may be used. Heat can be supplied to the reaction coil with the heat exchange medium during start-up and then extracted from the reaction coil once a self-sustaining, exothermic reaction is achieved.

In connection with the elliptical reaction coil or serpentine tubular of the present invention, a method is provided wherein a liquid which contains combustible material such as municipal waste is flowed through the elliptical coil or serpentine tubular reaction apparatus of this invention as an influent waste stream. A source of available oxygen such as air, an oxygen-enriched gas or pure oxygen is added to the waste. The temperature and pressure of the oxygenated liquid waste are elevated to produce a self- sustaining exothermic wet oxidation reaction inside the reaction apparatus. The reaction products are flowed out of the reaction apparatus as an effluent waste stream. The wet oxidation reaction is optimized by creating both slug and plug flow in the vertical upcomer and downcomer portions and secondary flow of the reactants in the curved portions of the coil. The residence time of the vapor phase is increased in the substantially vertical downcomer portions of the coil reaction apparatus. Surging of the reactants through the system is minimized by reducing the generally horizontal portions of the coil assembly as well as by providing the substantially vertical upcomer and downcomer portions. The turn- down ratio is also substantially increased whereby both lower throughput and higher throughput can be achieved than in a circular coil reaction apparatus.

The preferred "elliptical serpentine" embodiment of this invention may be enclosed in a furnace or cracking unit, wherein the elliptical serpentine tubular extends around the furnace enclosure and is heated by a radiant heater, for example. The heating unit may include a preheat, such as a coiled portion in the chimney, and the fuel for the heater may be a gas, such as methane, generated by the waste in a separate reaction.

The concentrations of combustible matter and oxygen and the amount of heat added or withdrawn from the system can be controlled to regulate the overall waste reaction, including regulating the time required to completely oxidize the waste and controlling reaction temperatures at various points along the length of the reaction coil. In the concentric tube assembly of the present invention, the reaction can be controlled such that the reaction continues in the effluent passage or annulus which is in heat exchange relationship with the influent passage to further heat the influent waste stream.

The invention will now be further described by way of example with reference to the accompanying drawings, in which:

Figure 1 is a schematic illustration of the reaction system of the present invention including a compartmentalized containment vessel;

Figure 2 is a schematic illustration of the reaction system including a tube-in-tube design for the tubular coil;

Figure 3 is a partial perspective view of the tube-in-tube configuration for the tubular coil;

Figure 4 is a schematic illustration of the reaction system wherein the heat exchange fluid is contained under pressure inside the containment vessel;

Figure 5 is a schematic illustration of the reaction system including a pressure control to establish the pressure of the vapour space above the heat exchange fluid within the containment vessel;

Figure 6 is a schematic illustration of the addition of a condenser or interchanger to permit an interchange of temperature between the effluent stream and the influent stream;

Figure 7 is a schematic illustration of the reaction system including multiple reactant injection or extraction points along the path of the tubular coil;

Figure 8 is a schematic illustration of the reaction coil of the present invention;

Figure 9 is a schematic illustration of a single, vertical coil of the present invention;

Figure 10 is a schematic illustration of the reaction system of the present invention which includes a compartmentalized containment vessel;

Figure 11 is a partial perspective view of the concentric tube assembly embodiment of the present invention;

Figure 12 is a side-elevational view of the terminal end of the concentric tube assembly embodiment of the present invention in cross-section;

Figure 13 is a schematic illustration of the reaction system of the present invention having a concentric tube assembly;

Figure 14 is a schematic illustration of the reaction system of the present invention wherein multiple sites are provided along the length of the reaction coil for the introduction or extraction of reactants and products;

Figure 15 is a schematic side illustration of the elliptical serpentine embodiment of this invention;

Figure 16 is a schematic side elevation of a reaction system utilizing the elliptical serpentine configuration of the reaction vessel; and

Figure 17 is a top elevation of the reaction system shown in Figure 16.

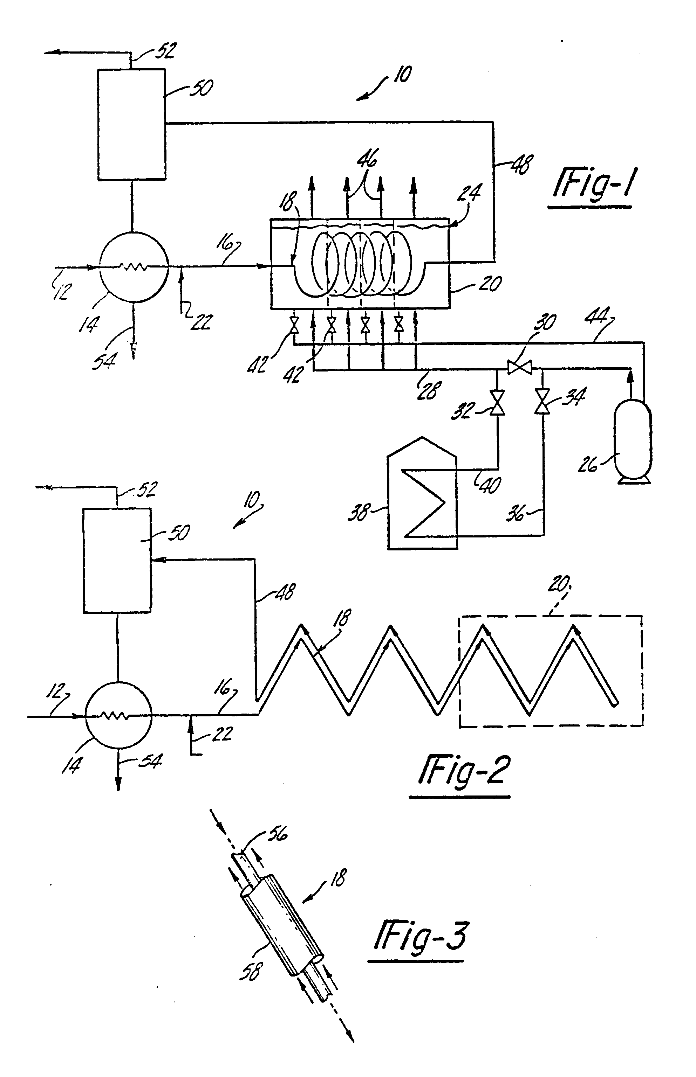

A schematic illustration of the above ground reaction system 10 of the present invention is shown in Figure 1. An influent waste stream or first reactant is directed through conduit 12, heat interchanger 14, and conduit 16 to a long tubular coil 18 within containment vessel 20. A second reactant may be added to the influent waste stream through conduit 22. If it is desired to use reaction system 10 for wet oxidation of a waste influent consisting of dilute organic waste, air or pure oxygen would typically be injected into the waste stream through conduit 22.

As shown in Figure 1, containment vessel 20 is partitioned to form a series of successive compartments which are substantially filled with a heat exchange fluid 24. Fluid 24 is pumped from reservoir 26 through conduit 28 into the individual compartments of vessel 20. By closing valve 30 in conduit 28 and opening valves 32 and 34, fluid 24 is directed through conduit 36 to a heat exchanger 38 where it is heated to a start-up temperature which will permit a reaction to occur in the waste stream within tubular coil 18. The heated fluid 24 leaves heat exchanger 38 through conduit 40 and is returned to vessel 20 through conduit 28. Alternatively, it may be necessary to extract heat from fluid 24 after the reaction within tubular coil 18 becomes autogenic. If so, fluid 24 may be circulated through heat exchanger inserted into conduit 44 for cooling it to the desired temperature.

The level of fluid 24 within each compartment of vessel 20 may be selectively controlled by operating any one of the valves 42 to permit the draining of fluid 24 through conduit 44 to reservoir 26. Further, if fluid 24 reaches a boiling temperature, pressurized vapour may be released through any one of the pressure relief lines 46 or the vapour may be circulated to a condenser for return to the system.

While the heat exchange fluid 24 disclosed in Figure 1 is a liquid. a gaseous or vapor heat exchange fluid may also be utilized. If a gaseous heat exchange fluid is used, a fan or blower would be connected to the system at the location of reservoir 26.

After the waste stream has been reacted within tubular coil 18, it passes through conduit 48 to separator 50 where the vapour effluent exits through conduit 52 and the liquid effluent exits through conduit 54 to interhchanger 14. As the liquid effluent passes through exchanger 14, its temperature is used to heat or cool the waste stream influent also passing therethrough.

When processing dilute organic waste in reaction system 10, the influent liquid waste stream is pumped to tubular coil 18 at a pressure of approximately 84.37 to 140.6 Kg/sq.cm (1200 to 2000 psi) with a gas such as air or oxygen being added through conduit 22. The gas and liquid flow rates are set to cause plug or slug flow of the two-phase waste stream through tubular coil 18, thereby resulting in intimate mixing of the reactants. The reactants are heated within coil 18 to a temperature resulting in oxidation of the waste stream which is generally between 149°C and 316°C (300°F and 600°F). Thus, the reaction within coil 18 occurs under the combined conditions of high pressure, high temperature, and two-phase plug flow in the waste stream.

This system provides the advantage of a thin walled reaction container, i.e., the tubing coil 18, which, because of its coiled length, provides the necessary residence time for the reactants in the reaction zone to permit the desired amount of oxidation. The high temperature and high pressure conditions required for the reaction are contained within the thin walled tubing, which is unexpected since reactions of this type have normally been conducted within pressure vessels having very thick walls. This feature substantially lowers capital costs for the equipment. Further, the plug or slug flow of the reactants through the tubing coil or reaction container 18 provides improved chemical reactant mixing because the curvature of the coil tends to induce a secondary flow in the liquid such that the liquid tends to travel in a spiral on the inside surfaces of the coils thereby providing more intimate mixing with the gaseous phase. Moreover, since the reaction container provided by tubing coil 18 is many times smaller in diameter as compared to known reaction vessels operating within the same pressure and temperature ranges, the performance of the oxidation process is improved since there is little possibility of the reactants to bypass the oxidation reaction.

As will be understood from the fluid dynamics of the disclosed reaction system, the concurrent flow of liquid, gas and solids at velocity sufficient to assure slug or plug flow will provide intimate mixing of the constituents, which is important in chemical reactions such as wet oxidation. At low to moderate velocities, bubble flow is succeeded by churn flow. At higher mass flows, the flows become slug and plug flow, respectively. In the most preferred method and apparatus of this invention, the fluid and suspended solids are separated by separate and distinct plugs of gas which induces back mixing and provides more intimate, pulsing contact between the liquid and gaseous phases. Further, plug flow occurs at a greater velocity. A bend or curvature in the tube acts to separate the phases. A bend can cause a coalescence of bubbles to form plugs and can separate entrained droplets in annular flow. The curvature of the coil in the preferred embodiment also induces secondary flow in the fluid in the form of a double spiral. As described, the liquid is entrained in the flow on the inside surface. The preferred horizontal coil in plug flow thus provides thorough and intimate contact between the liquid and gas phases while permitting relatively high velocities.

As described, the reaction coil is preferably thinwalled. In the pressurized above-ground reaction vessels disclosed in the prior art, the pressurized vessel has a wall thickness of about 15.25 cms (six inches) to withstand the reaction pressure and the changes in the pressure in the vessel. The diameter of the reaction vessel may be 1.83 to 3.05 metres (six to ten feet) in diameter to make a batch-type reaction commercially feasible. By way of example, the tubular coil reaction vessel of this invention may have a diameter of about two inches, accommodating a flow of 30.5 to 244 cms (one to eight feet) per second at a pressure of about 2000 pounds per square inch at 288°C (550°F). It will be understood that the inside tube diameter may be 2.54 cms (one inch) or less and range to about 15.25 cms (six inches) while maintaining the preferred plug or slug flow. In a typical reaction, the gas phase is about 30% by volume, the reaction temperature is about 260 to 316°C (500 to 600°F) and the pressure is about 140.6 Kg/sq.cm (2000 psi). Seamless nickel or titanium alloy steels are preferred for the tubing. For example, a nickel alloy seamless tube having an outside diameter of 6.03 cms (2.375 inches) has an inside diameter of 4.57 cms (1.8 inches) or a wall thickness of 0.729 cms (0.287 inches). A plug flow will be maintained in this tube at the specified temperatures and pressures at a flow rate of between 45.72 and 244 cms (1.5 and 8 feet) per second.

Referring again to Figure 1, the present invention permits different temperature gradients to be applied to successive sections of tubing coil 18 across its length. Since containment vessel 20 is compartmentalized, the temperature of the heat exchange fluid 24 in each compartment can be adjusted upwardly or downwardly as desired. This permits a fine control of the rate of reaction occurring within each section of tubing coil 18. Further, the fluid 24 in each compartment can be adjusted to different levels relative to the submerged coil 18 which also effects the chemical reaction rate as a result of the changes in the gradient of external temperature acting upon the coil section in each compartment.

Figures 2 and 3 illustrate an alternative tube in tube design for the tubing coil 18 consisting of two generally concentric tubes 56 and 58. In order to permit counter current flow of the waste stream, the end of the tubes 56 (i.e., the right hand end of the tube 56 as viewed in Figure 2) is spaced inwardly from the end of tube 58, which is closed. The influent two-phase waste stream passes through the inner tube 56 and returns within the annulus formed between the outer periphery of inner tube 56 and the inner periphery of outer concentric or surrounding tube 58. This permits counter current heat exchange between the waste stream within tube 56 and the returning stream within tube 58, and therefore, the heat exchange fluid 24 would be unnecessary. This design is especially applicable for processing reactants at or near autogenic operating point where heat input or removal is not required within containment vessel 20. For example, the concentration of the reactants passing through the inner tube 56 may be preset such that a predetermined amount of chemical reaction and heating from the reaction occurs during the time it takes the waste stream to reach the end of tube 56. The chemical reaction would then continue as the reactants return in the annulus between tubes 56 and 58, thereby permitting the heat of reaction in the returning waste stream to be transmitted for heating the incoming waste stream through tube 56. Further, the tube-in-tube design permits a ramped time temperature reaction rate as compared to the more step function type of reaction rate provided by the compartmentalized containment vessel, which was described in connection with Figure 1.

Referring now to Figure 4, the containment vessel 20 is again illustrated with tubing coil 18 therein. Coil 18 is immersed in heat exchange fluid 24 as before, but fluid 24 is contained under pressure inside vessel 20. To start the process in operation, a pump 60 delivers fluid 24 through conduit 62 to heater 64 which is then returned through conduit 66 in a heated state to containment vessel 20. Alternatively, a heating coil 68 or jacket or direct steam injection can be used to raise the temperature of fluid 24. After the reaction system is running autogenically by virtue of the heat produced within tubing coil 18 from the reactants, it is not necessary to use either heater 64 or heater coil 68. In fact, it may be necessary to remove heat from fluid 24 by closing valves 70 and 75 and opening valves 72 and 73 and pumping fluid 24 through a cooler 74 and returning the cooled fluid back to vessel 20.

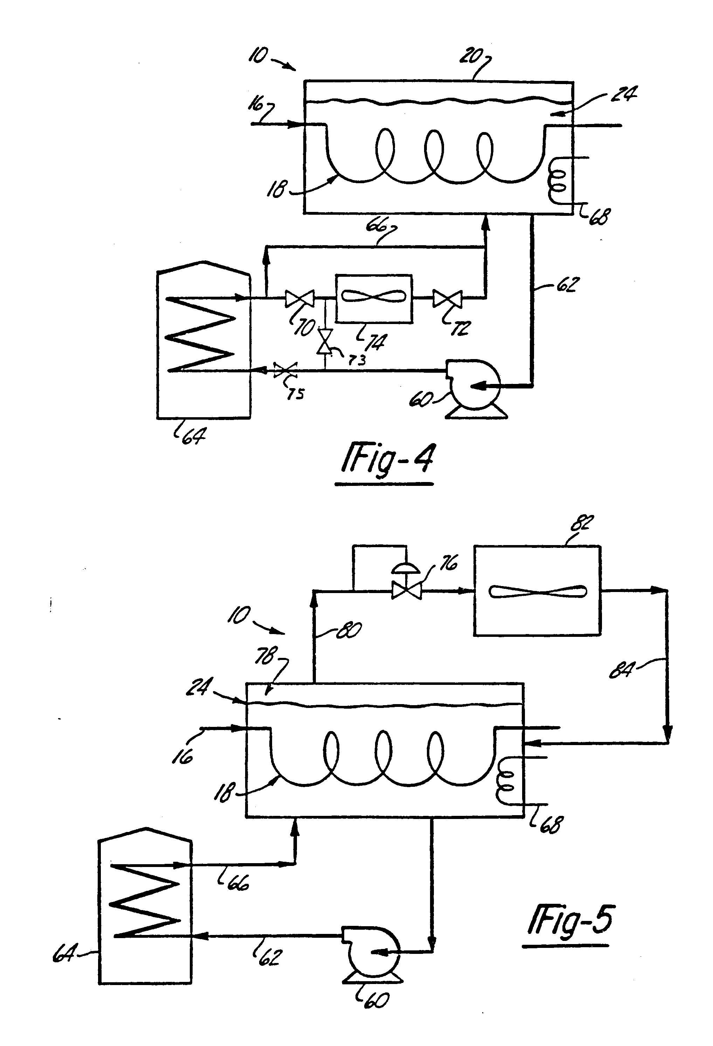

In Figure 5, a pressure control valve 76 is used to establish the pressure of the vapor space 78 above fluid 24 in containment vessel 20. The heat of reaction of the reactants in tubing coil 18 will produce boiling in fluid 24 adding to the pressure of the vapor held above it in space 78. When the pressure is excessive, valve 76 will release excess vapor through conduit 80 to condenser 82 and condensed fluid will return through conduit 84 to vessel 20.

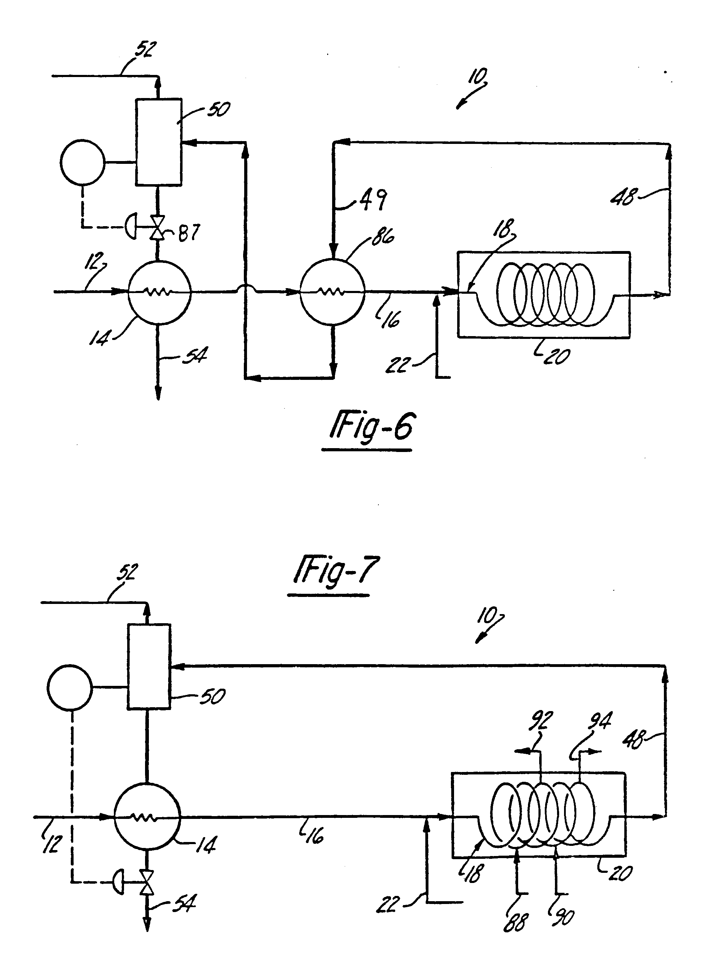

Figure 6 shows the reaction system 10 having the addition of condenser or interchanger 86 such that there is an interchange of temperature between the effluent stream and influent stream through conduits 48 and 16, respectively. This permits the use of a smaller vapor treatment system since the amount of water vapor in the vapor effluent stream is reduced. Also, since the temperature of the liquid in conduit 49 is reduced, it will substantially reduce the size and cost of separator 50, valve 87 and heat exchanger 14.

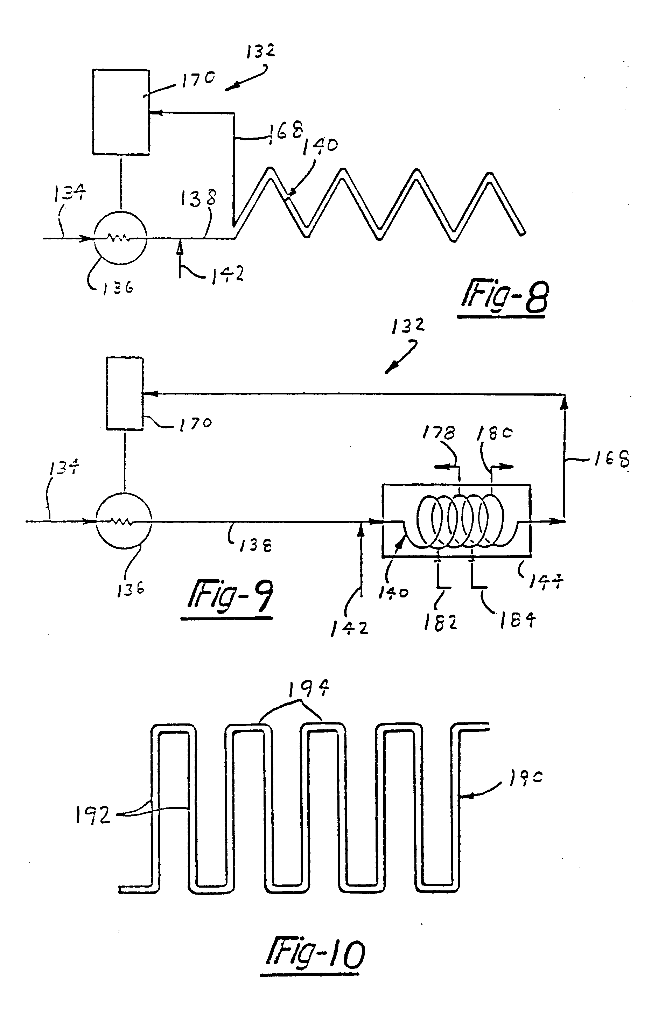

As shown in Figure 7, the use of a long tubular coil 18 as a reaction container allows the inclusion of multiple reactant injection or extraction points along the path of the tubular coil. Gas, liquid, or solid reactants may be added at multiple points along the length of the tubular coil 18 such as at injection points 88 and 90. Moreover, gas, liquid or solids may be extracted at various points such as 92 and 94. Multiple injection points permit fresh reactants to be added when, for example, the temperature of the waste stream has been heated by the reaction, thereby improving the overall reaction performance and capacity. Extraction of gaseous or solid reaction products at intermediate points along the length of the tubular coil will, for example, allow the reduction of the waste stream velocity downstream of the extraction point, thereby increasing the residence time of the remaining reactants.

The tubular coil 18, which is approximately 1.609Kms (one mile) in length, provides an excellent container for the reaction stream under high pressure and temperature to prevent its escape to the atmosphere. Further, the long tubular coil is extremely suitable for temperature control, as described, to permit continuous heat input, autogenic operation, and continuous heat extraction. The heat exchange fluid surrounding the tubular coil 18 within containment vessel 20 may include vapor, liquid or gaseous heat exchange fluids. Moreover, the start-up heat required for providing the reaction temperature can be conveniently provided through direct steam injection into tubular coil 18. Steam injection may be done before the entrance of the reactants into tubing coil 18. The tubular coil 18, and more particularly, the tube in tube design of Figures 2-3, or the multiple injection/extraction design of Figure 7, permits autogenic operation without the need for heat input or extraction since the temperature control may be achieved by varying the concentration of the reactants.

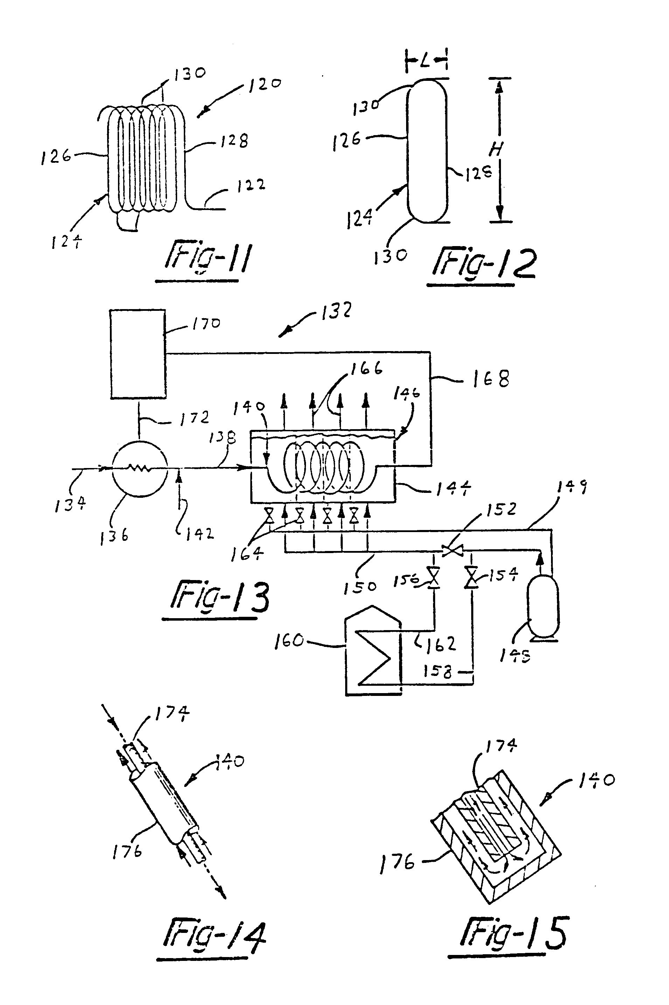

Referring now to Figure 11 of the drawings, in another embodiment of the present invention, "elliptical" reaction apparatus 120 of the present invention is shown schematically and includes conduit 122 which forms a series of generally elliptical sections or loops 124 one of which is illustrated individually in Figure 12. Each loop 124 is provided with substantially vertical upcomer portion 126 and corresponding substantially vertical downcomer portion 128. Although the configuration of each loop 124 can be generally thought of as an ellipse or pseudoellipse, it is preferred that portions 126 and 128 be substantially vertical to provide the desired flow pattern and residence times of the present invention. The elliptical nature of each loop 124 further minimizes horizontal flow of the reactants by minimizing the length of curved portions 130, only two of which are referenced in Figure 9 for simplicity. As will become more apparent during the description of the method of the present invention, substantially vertical upcomer portion 126, downcomer portion 128 and curved portions 130 of reactor coil 120 provide enhanced mixing of the reactants. Curved portions 130 also increase the structural integrity of reaction coil 120 by virtue of the bend-strength of a loop.

Conduit 122 is preferably a tube having an inner diameter of from about 0.9525 to 15.25 cms (0.375 in. to about 6.0 in) preferably about 0.9525 to 5.08 cms (0.375 to 2 inches). The improved reaction efficiency of the present invention allows a greater volume of waste to be processed in a smaller space. It may be desirable in some applications to use a conduit 122 having an internal diameter outside this preferred range. The walls of conduit 122 are thinner than conventional tube-like reaction apparatus by virtue of the increased strength provided by forming conduit 122 into a coil. Conduit 122 may have walls which are from about 0.0762 to about 0.635 cms (0.03 in. to about 0.25 in.) thick depending on the precise nature of the reaction to be carried out, the volume of conduit 122, and the strength of the materials of which conduit 122 is constructed. Suitable material from which conduit 122 may be formed include stainless steel and certain titanium alloys. Other suitable materials will be known to those skilled in the art. Seamless nickel or titanium alloy steels are especially useful due to their excellent corrosion resistance.

It is important that reaction coil 120 be oriented such that the major diameter or major axis of the ellipse is substantially vertical. The height of each loop 124, shown in Figure 12 as dimension "H" is preferably from about 152.5 cms to about 610 cms (about 5 feet to about 20 feet), and most preferably 185 cms to 305 cms (6 to 10 feet). Experimental evidence indicates that vertical sections of less than 122 cms (four feet) have little beneficial effect. Upcomer portion 126 and downcomer portion 128 each comprise about 75 percent or more of the total height of each loop 124. This is necessary to attain the beneficial flow pattern, residence times and surge control of the present invention and to prevent downcomer portion 128 from becoming dry. Curved portions 130 should be short enough to eliminate substantial horizontal flow without providing a sharp bend which would substantially constrict flow or cause a blockage. Hence the length of each curved portion 130 indicated as dimension "L" in Figure 12, should preferably be less than about two feet. Other dimensions may be suitable if the principles of the present invention are faithfully observed.

The length of conduit 122 is, again, dictated by the type of reaction which is carried out and by reaction parameters such as heat and reaction time. For the processing of municipal waste in a wet oxidation reaction, conduit 122 has a length of preferably from about 305 metres to 1830 metres (1,000 feet to 6,000 feet). This ensures that a large volume of sludge can be substantially fully oxidized in coil 122 at an acceptable mixed flow velocity. The number of loops 124 which make up reaction coil 120 is dictated by the previously described dimensions of loops 124 and the length of conduit 122. While reaction coil 120 is intended to be an above-ground reaction apparatus and, as such, is a relatively portable device, it may be advantageous to place reaction coil 120 beneath the ground, preserving of course, the vertical orientation of loops 124.

Referring now to Figure 8 of the drawings, the reaction system 132 of the present invention is shown in which a pressurized influent waste stream of, for example, diluted municipal waste is injected into channel 134, and flowed through heating means 136 which may be, for example, a gas or electric heater. The influent waste stream is heated to a temperature of about 149°C (300°F) which substantially increases its rate of reaction with oxygen during wet oxidation. As the heated waste stream leaves heating means 136, it is directed through channel 138 to reaction coil 140 which, as explained, is a vertical, generally elliptical-shaped structure. It may be desirable to insulate channel 138 to conserve thermal energy.

As the heated liquid waste stream flows through channel 138, a source of available oxygen is supplied via gas supply line 142. Oxygen is the second reactant in the wet oxidation system, the combustible portions of the liquid waste stream comprising the first reactant. The supply of oxygen is generally rate controlling and thus the reaction can be regulated by increasing or decreasing the amount of oxygen introduced into the waste stream. Air, pure oxygen or an oxygen-enriched gas are all suitable sources of available oxygen. It may be preferred in some applications to inject oxygen into the liquid waste at a site other than through supply line 142 or at multiple injection sites.

As shown in Figure 13, reaction coil 140 is positioned within containment vessel 144 which is illustrated as having a plurality of separate chambers each containing a single loop of reaction coil 140. Other arrangements may be suitable in which more than one loop is held within each compartment. In one particular alternative arrangement (not shown), the upcomer portions of reaction coil 140 are placed in a first set of compartments and the downcomer portions are placed in a second set of compartments. This added control over the reaction may be desirable in some instances.

Containment vessel 144 is provided to allow for heat exchange between the liquid stream undergoing the exothermic wet oxidation reaction and heat exchange medium 146 which is pumped into containment vessel 144 from reservoir 148 through conduit 150. If desired, heat exchange medium 146 can be heated by closing valve 152 and opening valves 154 and 156 whereby heat exchange medium 146 is directed through conduit 158 to heat exchanger 160 then back into conduit 150 by way of conduit 162. Alternatively, it may be necessary or desirable in some instances to remove heat from heat exchange medium 146 which it gains from reaction coil 140 during the exothermic wet oxidation reaction. This can be achieved in several ways in the present system including by reversing the flow of heat exchange medium 146 or by providing a heat exchanger (not shown) in cooperation with reservoir 148. Heat exchange medium can be returned to reservoir 148 through conduit 149.

The quantity or level of heat exchange medium 146 in containment vessel 144 can be regulated with valves 164 which are adapted in this embodiment to provide selective control over the level of heat exchange medium 146 in each compartment of containment vessel 144. Pressure relief valves 166 are also provided, shown here at the top of containment vessel 144. Pressure relief valves 166 allow vapor to be released which may be produced if heat exchange medium 146 boils during operation. Heat exchange medium 146 may include a liquid such as oil or possibly a gaseous medium. In those applications where heat exchange medium 146 is a gas or vapor, reservoir 148 would comprise a fan or blower.

The diluted waste stream is preferably pumped into reaction coil 140 at a pressure of preferably about 105.5 to 154.7 Kg/sq.cm (1500 to 2200 psi). As stated, a source of available oxygen is injected into the liquid waste through supply line 142. Pure oxygen or an oxygen enriched gas is preferred although air is suitable for use herein. Increasing the concentration of oxygen in the liquid waste stream increases the rate of the wet oxidation reaction. As the wet oxidation reaction proceeds, the temperature of the liquid waste stream rises inside coil 140 to a temperature of about 260°C to 371°C (500° to 700°F). At this temperature, the wet oxidation reaction becomes self-sustaining so long as sufficient combustible matter and oxygen are present, with adequate contacting of the two reactants. Hence, heat can then be extracted from reaction coil 140 with heat exchange medium 146. It may be desirable to utilize the compartments of containment vessel 144 to add heat to the liquid waste as it first enters reaction coil 140 and then extract heat near the end of reaction coil 140. The concentration of combustible wastes, the concentration of oxygen added to the liquid waste, the flow pattern and velocity of the reactants through reaction coil 140 and the temperature of the reactants are all regulated such that the waste is substantially completely reacted by the time it leaves reaction coil 140. It is also possible to operate the reaction at "supercritical", wherein the temperature is greater than 371°C (700°F) and the pressure exceeds 225 Kg/sq.cm (3200 psi). Supercritical reactions may be preferred for particular applications of the reaction system of this invention, such as the treament of a particular industrial waste.

After the waste stream has been substantially fully reacted within reaction coil 140, the reaction products are flowed out of reaction coil 140 through conduit 168 to separator 170. Here the reaction products or waste effluent are separated to produce a liquid stream and a low volume sterile ash. The liquid stream, which is still at an elevated temperature, can be flowed through conduit 172 to heating means 136 for use in heating the influent waste. The liquid liquid stream may also be used to dilute the influent waste. The wet oxidation reaction effluent has a substantially reduced oxygen demand. The generally elliptical shape of reaction coil 140 as previously described in more detail provides important advantages in the processing of liquid waste in the wet oxidation waste reaction. As air or oxygen is injected into the liquid waste through gas supply line 142, the flow of the liquid waste stream and the injected gas are controlled such that slug or plug flow is obtained in reaction coil 140 which, as will be understood by those skilled in the art, is a function of the relative velocities of the vapor phase liquid phase. Slug or plug flow is desirable because it provides good mixing and thus improved mass transfer of the reactants. This is, better contacting between oxygen and the combustible material is attained. In connection with the present invention, this slug or plug flow and the mass transfer which such flow enhances, is further accentuated by the generally elliptical nature of reaction coil 140.

Referring now to Figures 11 to 13 as the gas and liquid mixture passes through upcomer portion 126, its vertical configuration allows for rapid movement of the vapor phase through the upcomer portion. At curved sections 130, secondary flow is induced in the form of a double spiral resulting from the movement of the mixture on the curved reaction coil wall. By minimizing the length of the horizontal flow, stratification of the phases which otherwise occurs is greatly reduced. It is to be understood that as the liquid and vapor phases become more stratified in reaction coil 140, less mass transfer is achieved between the reactants. In addition to this improved mass transfer between the reactants, the reduction of stratification of the phases reduces surging of the mixture through reaction coil 140. Most importantly, the vapor phase, being less dense than the liquid phase, "floats" in the liquid phase, thus resisting the downward flow of the liquid phase in downcomer portion 128. This resistance substantially increases the contacting and mixing of the vapor with the liquid, thus increasing mass transfer and further accelerating the oxidation reaction. In addition, the vertical configuration of downcomer portion 128 of reaction coil 140 results in increased residence time for the vapor phase. Since the vapor rises, it remains in the downcomer portion a greater length of time. This results in increased mass transfer and better utilization of injected oxygen. Finally, by providing a downcomer portion 128 greater than 122 cms (4 feet) in length the downcomer portion is prevented from drying out which would otherwise reduce the mass transfer area and which may also cause unwanted spontaneous combustion. As described above, the upcomer portions also provide improved mixing and heat transfer. The gaseous phase is rising in the upcomer portions at a fast rate than the liquid. Where the fluid waste stream includes solids, the suspended solids are moving in the upcomer portions at a slower rate because of the influence of gravity. Thus, three separate flow rates are introduced, resulting in better mixing and heat transfer. Further, depending upon the composition of the reactants, the suspended solids "pulse" in the upcomer portions under the influence of the bubbles of gas. This has been found particularly true in the treatment of municipal sludge, wherein the fluid stream comprises diluted municipal sludge and oxygen or an oxygen enriched gas.

Referring now to Figure 14 of the drawings, the alternative arrangement of a concentric tube reaction coil is illustrated in which reaction coil 140 includes an inner tube 174 concentrically disposed within an outer tube 176. As indicated by arrows, the influent waste flows into the bore of inner tube 174 and the wet oxidation reaction products or waste effluent pass through the annulus created by outer tube 176 in a direction opposite that of the influent flow. Thus, in this arrangement, it is seen that the effluent stream is in a heat exchange relationship with the influent stream. The amount of heat transferred depends upon the thermal conductivity of the material which is used to form inner tube 174. In Figure 15, the end of reaction coil 140 is shown in cross-section where the arrows indicate the flow of the reaction products as they exit inner tube 174 and enter the annulus defined by outer tube 176.

In Figure 9, the waste reaction system of the present invention, including the concentric tube assembly illustrated in Figures 14 and 15, is shown schematically. Again the diluted liquid waste is flowed through channel 134 into heating means 136 where the temperature of the liquid waste is elevated to accelerate the wet oxidation reaction. As the heated liquid waste flows through channel 138, oxygen or another oxygen-containing gas is injected into the liquid waste through gas supply line 142 at a rate which will enhance mass transfer within reaction coil 140 as explained. The oxygenated waste is then flowed into reaction oil 140 which, as stated, in this embodiment of the invention comprises a concentric, or tube-within-a-tube assembly. Here, reaction coil 140 is shown diagrammatically only to illustrate the relative directions of the flow of the influent wastes and the substantially reacted effluent. In actuality, reaction coil 140 has the same elliptical configuration as shown in Figures 11 to 13. The wet oxidation reaction effluent is then flowed out of reaction coil 140 through conduit 168. The effluent is again flowed into a separator 170 for clarification, thickening, dewatering and the like.

Referring now to Figure 9 of the drawings, the waste reaction system of the present invention is shown in a modification which includes multiple reactant injection or extraction points along the path of reaction coil 140. Gas, liquid or solid reactants may be added at these multiple injection points 178 and 180 to more precisely control the wet oxidation reaction. Extraction points 182 and 184 allow materials to be removed from reaction coil 140 if desired. These multiple injection points permit fresh reactants to be added to better utilize the heat provided by the self-sustaining exothermic wet oxidation reaction. That is, unheated waste can be added directly to reaction coil 140 at points where the reaction temperature is high. It should be pointed out that heat which is extracted from reaction coil 140 by heat exchange medium 146 can also be used to heat the influent waste in this embodiment. Extraction of reaction products at extraction sites 182 and 184 allow the waste stream velocity to be reduced downstream of the extraction sites, thereby increasing the residence time of the remaining reactants.

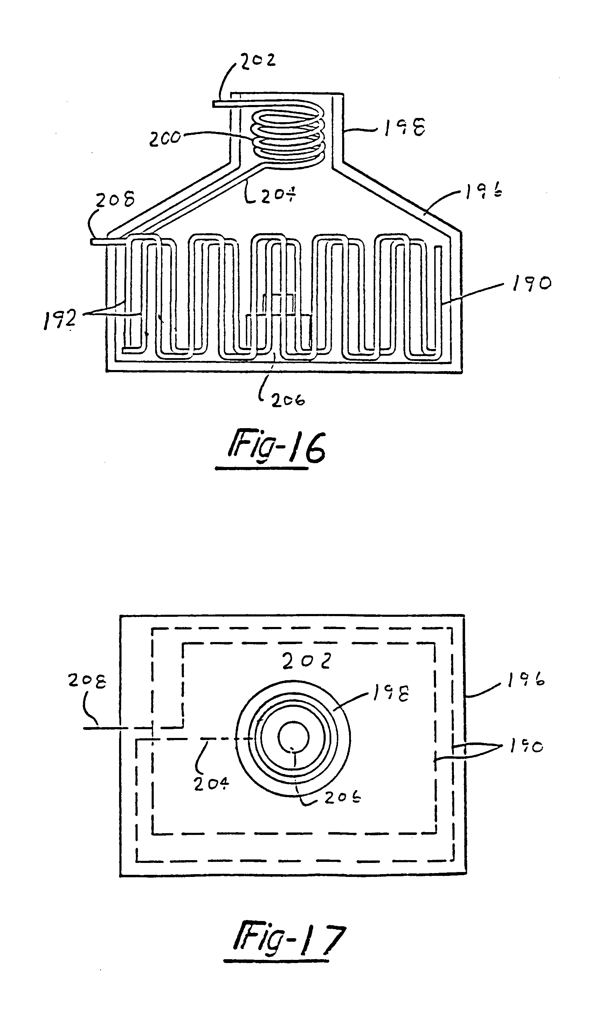

Figure 10 illustrates a preferred "elliptical serpentine" embodiment of the reaction apparatus of this invention. The reaction apparatus 190 includes substantial vertical upcomer and downcomer tubular portions 192 and interconnecting generally horizontal tubular portions 194. The elliptical serpentine embodiment 190 is particularly suitable for reaction systems enclosed in a furnace enclosure or cracking unit, as shown in Figures 16 and 17.

The cracking unit shown somewhat schematically in Figures 16 and 17 includes a furnace enclosure 196 having a chimney 198. The enclosure 196 may be formed from conventional furnace materials, such as steel reinforced furnace brick. The disclosed embodiment of the reaction system includes a preheat portion in the chimney 198, in the form of a circular coil 200. The fluid waste, which may be in the form of a solid suspension in a liquid, enters through inlet 202. As described, the method of this invention generally includes two reactants, such as diluted municipal sludge and oxygen, although the method and apparatus of this invention may also be utilized to treat a single "reactant". As described above, the gaseous reactant, such as oxygen or an oxygen in which gas may be added to the fluid waste at the inlet 202, or added in the reaction stream.

As will be understood from the description hereinbelow, the heated air in the furnace 196 escapes through chimney 198, preheating the reactants in the coil 200. The preheated reactants are then delivered through tube 204 to the elliptical serpentine reactor portion 190 at the lower portion of the furnace 196. As shown, the serpentine tubular extends twice around the furnace enclosure and the vertically extending portions 192 are staggered horizontally, as shown in Figure 16, so that both portions are exposed to the radiant heater shown schematically at 206. The radiant heater 206 may be a conventional burner, such as a methane burner. The methane may be generated by treating the effluent in an anaerobic polishing unit. The treated waste material is then removed from the reaction apparatus through outlet 208. As will be understood, the preferred temperature to which the reactants are heated within the tubular system will depend upon the reaction. As described above, the waste is preferably heated to a temperature of about 204 to 316°C (400 to 600°F). The dimensions of the elliptical serpentine tubular 190 may be the same coiled embodiment described hereinabove. That is, the vertical portions may be 152.4 to 122 cms (5 to 20 feet), or preferably about 183 to 304.8 cms (6 to 10 feet), wherein the horizontal portions 194 may be less than 60.86 cms (2 feet). As will be understood, the length of the reaction vessel, including vertical upcomer and downcomer portions and the generally horizontally interconnecting end portions, will depend upon the reaction carried out in the reaction apparatus. In most applications, the reaction apparatus would be at least 1000 feet long. In the treatment of municipal sludge, however, the reaction apparatus should be at least 1219 to 1524 metres (4000 to 5000 feet) in length.

## Claims

1. A waste treatment apparatus characterised by:
   (a) a containment vessel;
   (b) a non-segmented long thin-walled tubular coil horizontally positioned in the containment vessel for flowing an influent fluid waste stream containing reactants therethrough at a selected flow rate to cause plug or slug flow of the influent fluid waste stream through the coil;
   (c) the containment vessel being adapted to receive a heat exchange medium to control the temperature of the influent fluid waste stream containing reactants by adding heat to the fluid waste stream when the temperature of the fluid waste stream is below a predetermined temperature and remove heat from the fluid waste stream when the temperature of the fluid waste stream is above a predetermined temperature such that the reactants react in the tubular coil to form reaction products;

(d) means for receiving the heated fluid and reaction product effluent from the tubular coil.

2. An apparatus according to claim 1, wherein there is means for receiving the fluid and reaction product effluent from the tubular coil which includes a separator for separating a vapour portion from a liquid portion.

3. An apparatus according to claim 1, wherein the containment vessel includes a series of compartments in which sections of the tubular coil reside and wherein the medium for controlling the temperature of the fluid waste stream provides control of the temperature within each section of the coil to permit different temperature gradients to be applied to successive sections of the coil across its length.

4. An apparatus according to claim 3, wherein there is means for selectively adjusting the level of the heat exchange fluid within each of the compartments to establish different gradients of temperature acting upon the tubular coil in each of the compartments.

5. An apparatus according to claim 1, wherein the tubular coil comprises an inner tube and an outer tube concentrically arranged such that the inner tube is located inside the outer tube for permitting flow of the influent fluid waste stream through the inner tube in a first direction and returning the fluid waste stream in a second opposite direction within the annulus formed between the outer periphery of the inner tube and the inner periphery of the outer tube, and there is means for controlling the concentration of the reactants in the fluid waste stream such that an exothermic chemical reaction occurs as the fluid waste stream flows in the first direction and thereafter may continue as the fluid waste stream flows in the second direction, whereby as the fluid waste stream flows in the second direction, the heat generated by the chemical reaction in the fluid waste stream is used to heat the fluid waste stream flowing in the first direction.

6. An apparatus according to claim 1, wherein there is means in fluid communication with the tubular coil for adding a gas to the fluid waste stream before the stream enters the tubular coil, and means for directing the fluid waste stream through the thin-walled tubular coil under high pressure and temperature and at a flow rate that induces a secondary flow in the fluid waste stream such that the liquid will travel in a spiral on the inside surface of the coil thereby providing intimate mixing between the liquid and the gas.

7. An apparatus according to claim 6, wherein the temperature controlling means includes means for maintaining the temperature of the fluid stream within said coil between 177°C and 316°C (350°F and 600°F) and also means for maintaining the pressure of the fluid stream within the range of 8274 to 13790 kPa (1200 to 2000 psi).

8. An apparatus according to claim 1, wherein the containment vessel also includes means for heating the heat exchange fluid to a start-up temperature which will cause a chemical reaction to occur between the reactants to an autogenic reaction temperature in the fluid waste stream within the tubular coil and means for extracting heat from the heat exchange fluid after the chemical reaction becomes autogenic.

9. An apparatus according to claim 1, wherein the temperature controlling means includes means for injecting steam into the tubular coil to heat the coil to a start-up temperature.

10. An apparatus according to any of claims 1 to 9, for effecting reactions at supercritical conditions.

11. A method of effecting waste processing reactions characterised by the steps of:

(a) flowing an influent fluid waste stream containing reactants through a non-segmented long thin-walled tubular coil horizontally positioned within a containment vessel, the step of flowing being controlled to provide a selected flow rate to cause plug or slug flow of the influent fluid waste stream through said coil;

(b) circulating a heat exchange medium through the containment vessel and in contact with the tubular coil;

(c) controlling the temperature of the fluid waste stream within the tubular coil by adding heat to the fluid waste stream when the temperature of the fluid waste is below a predetermined temperature and removing heat from the fluid waste stream when the temperature of the fluid waste is above a predetermined temperature wherein a chemical reaction of the reactants in the fluid waste stream occurs to form an effluent fluid stream containing reaction products.

12. A method according to claim 11, wherein the containment vessel has a series of compartments and wherein the temperature controlling step includes controlling the temperature of the fluid waste stream within each of the compartments to permit different temperature gradients to be applied to successive sections of the tubular coil across its length.

13. A method according to claim 12, wherein the containment vessel is substantially filled with the heat exchange fluid and including the step of selectively and sequentially heating and cooling the heat exchange fluid within each of the compartments to provide different temperature gradients to be applied to successive sections of the tubular coil across its length.

14. A method according to claim 13, wherein there is also a step of selectively adjusting the level of the heat exchange fluid within each of the compartments to establish different gradients of temperature acting upon the tubular coil in each of the compartments.

15. A method according to claim 11, wherein the tubular coil comprises an inner tube and an outer tube which are concentrically arranged such that the inner tube is located inside the outer tube and wherein the step of flowing the influent fluid waste stream through the tubular coil includes flowing the fluid waste stream through the inner tube in a first direction and returning the fluid waste stream in a second opposite direction within the annulus formed between the outer periphery of the inner tube and the inner periphery of the outer tube such that the temperature controlling step results in the effluent fluid stream and reaction products.

16. A method according to claim 15, wherein the chemical reaction is exothermic and there is a step of controlling the concentration of the reactants in the fluid waste stream such that the exothermic chemical reaction occurs as the fluid waste stream flows in the first direction and the reaction thereafter increases as the fluid waste stream flows in the second direction to form the effluent fluid stream and reaction products whereby the heat generated by the chemical reaction in the fluid waste stream as it flows in the second direction heats the fluid waste stream flowing in the first direction.

17. A method according to claim 11, wherein one of said reactants is organic waste in a liquid stream and another of the reactants is a gas and wherein the liquid stream is flowed through the thin-walled tubular coil under high pressure and temperature.

18. A method according to claim 17, wherein the temperature of said reactants in said coil is maintained between 177°C and 316°C (350°F and 600°F) and the pressure is maintained within the range of 8274 to 13790 kPa (1200 to 2000 psi).

19. A method according to claim 17, wherein the step of flowing the reactants through the coil is controlled such that there is induced a secondary flow in the liquid stream such that the liquid stream travels in a spiral on the inside surfaces of the coil thereby providing intimate mixing between the liquid stream and the gas.

20. A method according to claim 11, wherein the chemical reaction is exothermic and wherein the containment vessel is substantially filled with the heat exchange fluid and there are also steps of pressurizing the containment vessel, heating the heat exchange fluid to a start-up temperature sufficient for the chemical reaction to continue autogenically in the fluid waste stream within the tubular coil and extracting heat from the heat exchange fluid during the autogenic chemical reaction.

21. A method according to claim 20, wherein a vapour space is provided within the containment vessel above the heat exchange fluid and there are also steps of using the heat provided by the exothermic reaction to boil the heat exchange fluid to produce a vapour in the vapour space, releasing the vapour from the vapour space, condensing the released vapour and returning the condensed vapour to the containment vessel.

22. A method according to claim 11, wherein there is also a step of flowing the effluent fluid stream and reaction products from the tubular coil in a path which is in a heat exchange relation to the influent fluid waste stream.

23. A method according to claim 11, wherein there is also a step of injecting steam into the tubular coil to heat the coil to a start-up temperature before the step of flowing the fluid waste stream through the coil to cause a chemical reaction to occur in the fluid waste stream within the coil.

24. A method according to claim 11, wherein one of the reactants is a gas and another reactant is liquid, the gaseous reactant is introduced into the liquid in the coil and the flow rate of the liquid containing the gas is maintained through the coil at a velocity sufficient to produce substantially separate and distinct plugs of gas and liquid.

25. A method according to any of claims 11 to 24, wherein the reactants include gaseous oxygen and combustible municipal waste.

26. A method according to any of claims 11 to 25, wherein reaction is conducted at supercritical conditions.

## Patentansprüche

1. Abproduktbehandlungsvorrichtung, gekennzeichnet durch:
   (a) einen Sicherheitsbehälter;
   (b) eine nichtsegmentierte lange dünnwandige Rohrschlange, die in dem Sicherheitsbehälter horizontal positioniert ist zum Strömenlassen eines Reaktionspartner enthaltenden zuströmenden Fluid-Abproduktstroms mit einer ausgewählten Durchflußrate durch die Schlange, um eine Zweiphasenströmung des zuströmenden Fluid-Abproduktstroms durch die Schlange zu bewirken;
   (c) wobei der Sicherheitsbehälter ein Wärmeaustauschmedium aufnimmt, um die Temperatur des Reaktionspartner enthaltenden zuströmenden Fluid-Abproduktstroms durch Hinzufügen von Wärme zu dem Fluid-Abproduktstrom, wenn die Temperatur des Fluid-Abproduktstroms unter einer vorbestimmten Temperatur liegt, und durch Abführen von Wärme aus dem Fluid-Abproduktstrom, wenn die Temperatur des Fluid-Abproduktstroms über einer vorbestimmten Temperatur liegt, derart zu regeln, daß die Reaktionspartner in der Rohrschlange unter Bildung von Reaktionsprodukten reagieren;
   (d) eine Einrichtung zur Aufnahme des erwärmten Fluid-und Reaktionsprodukt-Ausflusses aus der Rohrschlange.

2. Vorrichtung nach Anspruch 1, wobei eine Einrichtung zur Aufnahme des Fluid- und Reaktionsprodukt-Ausflusses aus der Rohrschlange vorgesehen ist, die einen Separator zum Trennen eines Dampfanteils von einem Flüssigkeitsanteil aufweist.

3. Vorrichtung nach Anspruch 1, wobei der Sicherheitsbehälter eine Reihe von Kammern aufweist, in denen Abschnitte der Rohrschlange liegen, und wobei das Medium zum Regeln der Temperatur des Fluid-Abproduktstroms für eine Regelung der Temperatur in jedem Abschnitt der Schlange sorgt, um das Beaufschlagen von aufeinanderfolgenden Abschnitten der Schlange mit verschiedenen Temperaturgradienten über die Länge der Schlange zuzulassen.

4. Vorrichtung nach Anspruch 3, wobei eine Einrichtung zum selektiven Einstellen des Pegels des Wärmeaustauschfluids in jeder Kammer vorgesehen ist, um verschiedene, auf die Rohrschlange in jeder Kammer einwirkende Temperaturgradienten auszubilden.

5. Vorrichtung nach Anspruch 1, wobei die Rohrschlange ein Innen- und ein Außenrohr aufweist, die konzentrisch so angeordnet sind, daß das Innenrohr in dem Außenrohr angeordnet ist, um ein Strömen des zuströmenden Fluid-Abproduktstroms durch das Innenrohr in einer ersten Richtung und ein Rückführen des Fluid-Abproduktstroms in einer zweiten, entgegengesetzten Richtung innerhalb des zwischen dem Außenumfang des Innenrohrs und dem Innenumfang des Außenrohrs gebildeten Ringraums zu gestatten, und wobei eine Einrichtung zum Einstellen der Konzentration der Reaktionspartner in dem Fluid-Abproduktstrom vorgesehen ist, so daß eine exotherme chemische Reaktion stattfindet, während der Fluid-Abproduktstrom in der ersten Richtung strömt, und danach weiter ablaufen kann, während der Fluid-Abproduktstrom in der zweiten Richtung strömt, wodurch während des Strömens des Fluid-Abproduktstroms in der zweiten Richtung die durch die chemische Reaktion in dem Fluid-Abproduktstrom erzeugte Wärme genutzt wird, um den in der ersten Richtung strömenden Fluid-Abproduktstrom zu erwärmen.

6. Vorrichtung nach Anspruch 1, wobei vorgesehen sind: eine Vorrichtung in Fluidverbindung mit der Rohrschlange zum Hinzufügen eines Gases zu dem Fluid-Abproduktstrom, bevor der Strom in die Rohrschlange eintritt, und eine Einrichtung zum Leiten des Fluid-Abproduktstroms durch die dünnwandige Rohrschlange unter Hochdruck und -temperatur und mit einer Durchflußrate, die eine Sekundärströmung in dem Fluid-Abproduktstrom induziert, so daß sich die Flüssigkeit als Spirale auf der Innenfläche der Schlange bewegt, wodurch ein inniges Vermischen zwischen der Flüssigkeit und dem Gas stattfindet.

7. Vorrichtung nach Anspruch 6, wobei die Temperaturregeleinrichtung aufweist: eine Einrichtung, um die Temperatur des Fluidstroms in der Schlange zwischen 177 °C und 316 °C (350 °F und 600 °F) zu halten, und ferner eine Einrichtung, um den Druck des Fluidstroms in dem Bereich von 8274-13790 kPa (1200-2000 psi) zu halten.

8. Vorrichtung nach Anspruch 1, wobei der Sicherheitsbehälter ferner aufweist: eine Einrichtung, um das Wärmeaustauschfluid auf eine Ingangsetzungstemperatur zu erwärmen, die bewirkt, daß zwischen den Reaktionspartnern eine chemische Reaktion auf eine autogene Reaktionstemperatur in dem Fluid-Abproduktstrom in der Rohrschlange stattfindet, und eine Einrichtung, um Wärme aus dem Wärmeaustauschfluid abzuziehen, nachdem die chemische Reaktion autogen geworden ist.

9. Vorrichtung nach Anspruch 1, wobei die Temperaturregeleinrichtung eine Einrichtung zum Einpressen von Dampf in die Rohrschlange aufweist, um die Schlange auf eine Ingangsetzungstemperatur zu erwärmen.

10. Vorrichtung nach einem der Ansprüche 1 bis 9 zum Bewirken von Reaktionen unter überkritischen Bedingungen.

11. Verfahren zum Bewirken von Abproduktaufbereitungsreaktionen, gekennzeichnet durch folgende Schritte:
(a) Strömenlassen eines Reaktionspartner enthaltenden zuströmenden Fluid-Abproduktstroms durch eine nichtsegmentierte lange dünnwandige Rohrschlange, die in einem Sicherheitsbehälter horizontal positioniert ist, wobei der Schritt des Strömenlassens so gesteuert wird, daß eine ausgewählte Durchflußrate vorgesehen wird, um eine Zweiphasenströmung des zuströmenden Fluid-Abproduktstroms durch die Schlange zu bewirken;
(b) Zirkulieren eines Wärmeaustauschmediums durch den Sicherheitsbehälter und in Kontakt mit der Rohrschlange;
(c) Regeln der Temperatur des Fluid-Abproduktstroms in der Rohrschlange durch Hinzufügen von Wärme zu dem Fluid-Abproduktstrom, wenn die Temperatur des Fluid-Abprodukts unter einer vorbestimmten Temperatur liegt, und Abführen von Wärme aus dem Fluid-Abproduktstrom, wenn die Temperatur des Fluid-Abprodukts über einer vorbestimmten Temperatur liegt, wobei eine chemische Reaktion der Reaktionspartner in dem Fluid-Abproduktstrom unter Bildung eines Reaktionsprodukte enthaltenden Fluidstrom-Ausflusses stattfindet.

12. Verfahren nach Anspruch 11, wobei der Sicherheitsbehälter eine Reihe von Kammern aufweist und wobei der Temperaturregelschritt das Regeln der Temperatur des Fluid-Abproduktstroms in jeder Kammer umfaßt, um das Beaufschlagen aufeinanderfolgender Abschnitte der Rohrschlange mit verschiedenen Temperaturgradienten über die Länge der Schlange zuzulassen.

13. Verfahren nach Anspruch 12, wobei der Sicherheitsbehälter mit dem Wärmeaustauschfluid im wesentlichen gefüllt ist und das Verfahren den Schritt des selektiven und sequentiellen Erwärmens und Abkühlens des Wärmeaustauschfluids in jeder Kammer umfaßt, um verschiedene Temperaturgradienten zum Beaufschlagen aufeinanderfolgender Abschnitte der Rohrschlange über deren Länge auszubilden.

14. Verfahren nach Anspruch 13, wobei ferner ein Schritt des selektiven Einstellens des Pegels des Wärmeaustauschfluids in jeder Kammer vorgesehen ist, um auf die Rohrschlange in jeder Kammer einwirkende verschiedene Temperaturgradienten auszubilden.

15. Verfahren nach Anspruch 11, wobei die Rohrschlange ein Innen- und ein Außenrohr aufweist, die konzentrisch so angeordnet sind, daß das Innenrohr in dem Außenrohr angeordnet ist, und wobei der Schritt des Strömenlassens des zuströmenden Fluid-Abproduktstroms durch die Rohrschlange das Strömenlassen des Fluid-Abproduktstroms durch das Innenrohr in einer ersten Richtung und das Rückführen des Fluid-Abproduktstroms in einer zweiten, entgegengesetzten Richtung in dem zwischen dem Außenumfang des Innenrohrs und dem Innenumfang des Außenrohrs gebildeten Ringraum umfaßt, so daß der Temperaturregelschritt in dem Fluidstrom- und Reaktionsprodukte-Ausfluß resultiert.

16. Verfahren nach Anspruch 15, wobei die chemische Reaktion exotherm ist und wobei das Verfahren einen Schritt des Einstellens der Konzentration der Reaktionspartner in dem Fluid-Abproduktstrom umfaßt, so daß die exotherme chemische Reaktion stattfindet, während der Fluid-Abproduktstrom in der ersten Richtung strömt, und die Reaktion danach zunimmt, während der Fluid-Abproduktstrom in der zweiten Richtung strömt, um den Fluidstrom- und Reaktionsprodukte-Ausfluß zu bilden, wodurch die Wärme, die durch die chemische Reaktion in dem Fluid-Abproduktstrom erzeugt wird, während dieser in der zweiten Richtung strömt, den in der ersten Richtung strömenden Fluid-Abproduktstrom erwärmt.

17. Verfahren nach Anspruch 11, wobei einer der Reaktionspartner organisches Abprodukt in einem Flüssigkeitsstrom und ein anderer Reaktionspartner ein Gas ist und wobei der Flüssigkeitsstrom unter Hochdruck und -temperatur durch die dünnwandige Rohrschlange geleitet wird.

18. Verfahren nach Anspruch 17, wobei die Temperatur der Reaktionspartner in der Schlange zwischen 177 °C und 316 °C (350 °F und 600 °F) und der Druck in dem Bereich von 8274-13790 kPa (1200-2000 psi) gehalten wird.

19. Verfahren nach Anspruch 17, wobei der Schritt des Strömenlassens der Reaktionspartner durch die Schlange so gesteuert wird, daß eine Sekundärströmung in dem Flüssigkeitsstrom induziert wird, so daß sich der Flüssigkeitsstrom als Spirale auf den Innenflächen der Schlange bewegt, wodurch ein inniges Vermischen zwischen dem Flüssigkeitsstrom und dem Gas stattfindet.

20. Verfahren nach Anspruch 11, wobei die chemische Reaktion exotherm ist und wobei der Sicherheitsbehälter mit dem Wärmeaustauschfluid im wesentlichen gefüllt ist und wobei ferner folgende Schritte vorgesehen sind: Unterdrucksetzen des Sicherheitsbehälters, Erwärmen des Wärmeaustauschfluids auf eine Ingangsetzungstemperatur, die ausreicht, damit die chemische Reaktion in dem Fluid-Abproduktstrom in der Rohrschlange autogen weiter abläuft, und Abziehen von Wärme aus dem Wärmeaustauschfluid während der autogenen chemischen Reaktion.

21. Verfahren nach Anspruch 20, wobei ein Dampfraum in dem Sicherheitsbehälter über dem Wärmeaustauschfluid vorgesehen ist und wobei ferner folgende Schritte vorgesehen sind: Nutzen der durch die exothermen Reaktion erzeugten Wärme zum Sieden des Wärmeaustauschfluids, um Dampf in dem Dampfraum zu erzeugen, Ablassen des Dampfs aus dem Dampfraum, Kondensieren des abgelassenen Dampfs und Rückführen des kondensierten Dampfs zu dem Sicherheitsbehälter.

22. Verfahren nach Anspruch 11, wobei ferner ein Schritt des Strömenlassens des Fluidstrom- und Reaktionsprodukte-Ausflusses aus der Rohrschlange in einer Bahn vorgesehen ist, die in einer Wärmeaustauschbeziehung zu dem zuströmenden Fluid-Abproduktstroms steht.

23. Verfahren nach Anspruch 11, wobei ferner ein Schritt des Einpressens von Dampf in die Rohrschlange vorgesehen ist, um die Schlange vor dem Schritt des Strömenlassens des Fluid-Abproduktstroms durch die Schlange auf eine Ingangsetzungstemperatur zu erwärmen, um zu bewirken, daß in dem Fluid-Abproduktstrom in der Schlange eine chemische Reaktion stattfindet.

24. Verfahren nach Anspruch 11, wobei einer der Reaktionspartner ein Gas und ein anderer Reaktionspartner eine Flüssigkeit ist, der gasförmige Reaktionspartner in die Flüssigkeit in der Schlange eingeführt und die Durchflußrate der das Gas enthaltenden Flüssigkeit durch die Schlange auf einer Geschwindigkeit gehalten wird, die ausreicht, um im wesentlichen getrennte und deutliche Gas- und Flüssigkeitspropfen zu erzeugen.

25. Verfahren nach einem der Ansprüche 11 bis 24, wobei die Reaktionspartner gasförmigen Sauerstoff und brennbares kommunales Abprodukt umfassen.

26. Verfahren nach einem der Ansprüche 11 bis 25, wobei die Reaktion unter überkritischen Bedingungen durchgeführt wird.

**Revendications**

1. Dispositif pour le traitement de déchets, caractérisé par:

    (a) une enceinte de retenue;

    (b) un long serpentin non segmenté et à paroi mince, disposé horizontalement dans l'enceinte de retenue pour faire circuler un courant de déchets fluides affluents, contenant des réactifs, dans le serpentin à un débit sélectionné pour produire un écoulement avec bouchons ou un écoulement aggloméré du courant de déchets fluides affluents, à travers le serpentin;

    (c) l'enceinte de retenue étant adaptée pour recevoir un milieu d'échange thermique servant à régler la température du courant de déchets fluides affluents contenant des réactifs, grâce à l'application de chaleur au courant de déchets fluides, lorsque la température du courant de déchets fluides est inférieure à une température prédéterminée et pour retirer de la chaleur du courant de déchets fluides lorsque la température du courant de déchets fluides est supérieure à une température prédéterminée de sorte que les réactifs réagissent dans le serpentin tubulaire pour former des produits de la réaction;

(d) des moyens pour recevoir le fluide chauffé et le produit de la réaction affluents sortant du serpentin tubulaire.

2. Dispositif selon la revendication 1, dans lequel il est prévu un moyen pour recevoir le fluide et le produit de la réaction sortant du serpentin tubulaire, qui comprend un séparateur servant à séparer une partie à l'état de vapeur d'une partie liquide.

3. Dispositif selon la revendication 1, dans lequel l'enceinte de retenue comprend une série de compartiments, dans lesquels sont situées des sections du serpentin tubulaire, et dans lequel le milieu servant à régler la température du courant de déchets fluides assure un réglage de la température à l'intérieur de chaque section du serpentin de manière à permettre l'application de gradients différents de température à des sections successives du serpentin, sur l'étendue en longueur de ce dernier.

4. Dispositif selon la revendication 3, dans lequel il est prévu des moyens pour régler de façon sélective le niveau du fluide d'échange thermique à l'intérieur de chacun des compartiments pour établir des gradients différents de température agissant sur le serpentin tubulaire dans chacun des compartiments.

5. Dispositif selon la revendication 1, dans lequel le serpentin tubulaire comprend un tube intérieur et un tube extérieur disposés concentriquement de telle sorte que le tube intérieur est situé à l'intérieur du tube extérieur de manière à permettre la circulation du courant de déchets fluides affluents dans le tube intérieur, dans une première direction et le retour du courant de déchets fluides dans une seconde direction opposée à l'intérieur de l'anneau formé entre la périphérie extérieure du tube intérieur et la périphérie intérieure du tube extérieur, et il est prévu des moyens pour régler la concentration des réactifs dans le courant de déchets fluides de telle sorte qu'une réaction chimique exothermique se produit lorsque le courant de déchets fluides circule dans la première direction, puis peut se poursuivre lorsque le courant de déchets fluides circule dans la seconde direction, ce qui a pour effet que, lorsque le courant de déchets fluides circule dans la seconde direction, la chaleur produite par la réaction chimique dans le courant de déchets fluides est utilisée pour chauffer le courant de déchets fluides circulant dans la première direction.

6. Disposition selon la revendication 1, dans lequel il est prévu des moyens en communication fluidique avec le serpentin tubulaire pour ajouter un gaz au courant de déchets fluides avant que ce courant pénètre dans le serpentin tubulaire, et des moyens pour diriger le courant de déchets fluides dans le serpentin tubulaire à paroi mince, sous haute pression et à une température élevée et avec un débit qui induit un courant secondaire dans le courant de déchets fluides de sorte que le liquide se déplace selon une spirale sur la surface intérieure du serpentin, ce qui produit un mélange intime entre le liquide et le gaz.

7. Dispositif selon la revendication 6, dans lequel les moyens de réglage de la température comprennent des moyens pour maintenir la température du courant fluide dans ledit serpentin entre 177°C et 316°C et également des moyens pour maintenir la pression du courant fluide dans la gamme comprise entre 8274 et 13790 kPa.

8. Dispositif selon la revendication 1, dans lequel l'enceinte de retenue comprend également des moyens pour chauffer le fluide d'échange thermique depuis une température de démarrage, qui entraîne l'apparition d'une réaction chimique entre les réactifs, jusqu'à une température de réaction autogène dans le courant de déchets fluides à l'intérieur du serpentin tubulaire, et des moyens pour extraire de la chaleur à partir du fluide d'échange thermique une fois que la réaction chimique devient autogène.

9. Dispositif selon la revendication 1, dans lequel les moyens de réglage de la température comprennent des moyens pour injecter de la vapeur dans le serpentin tubulaire afin de chauffer ce dernier à une température de démarrage.

10. Dispositif selon l'une quelconque des revendications 1 à 9 pour exécuter des réactions dans des conditions supercritiques.

**11.** Procédé pour exécuter des réactions de traitement de déchets caractérisé par les étapes consistants à:

(a) faire circuler un courant de déchets fluides affluents contenant des réactifs, dans un long serpentin tubulaire non segmenté et à paroi mince, disposé horizontalement dans une enceinte de retenue, l'étape de circulation étant commandée de manière à produire un débit sélectionné de manière à produire ou un écoulement avec bouchons ou un écoulement aggloméré du courant de déchets fluides affluents, à travers ledit serpentin.

(b) faire circuler un milieu d'échange thermique dans l'enceinte de retenue et en contact avec le serpentin tubulaire;

(c) régler la température du courant de déchets fluides dans le serpentin tubulaire par application d'une chaleur au courant de déchets fluides lorsque la température des déchets fluides est inférieure à une température prédéterminée, et retirer de la chaleur du courant de déchets fluides lorsque la température des déchets fluides est supérieure à une température prédéterminée, une réaction chimique des réactifs dans le courant de déchets fluides se produisant de manière à former un courant fluide effluent contenant des produits de réaction.

**12.** Procédé selon la revendication 11, selon lequel l'enceinte de retenue possède une série de compartiments et selon lequel l'étape de réglage de la température comprend le réglage de la température du courant de déchets fluides dans chacun des compartiments pour permettre l'application de différents gradients de température à des sections successives du serpentin tubulaire, sur l'étendue en longueur ce de dernier.

**13.** Procédé selon la revendication 12, selon lequel l'enceinte de retenue est essentiellement remplie par le fluide d'échange thermique, et qui comprend l'étape de chauffage et de refroidissement sélectifs et successifs du fluide d'échange thermique dans chacun des compartiments pour produire différents gradients de température devant être appliqués à des sections successives du serpentin tubulaire sur l'étendue en longueur de ce dernier.

**14.** Procédé selon la revendication 13, selon lequel il est également prévu une étape de réglage sélectif du niveau du fluide d'échange thermique à l'intérieur de chacun des compartiments pour établir différents gradients de température agissant sur le serpentin tubulaire dans chacun des compartiments.

**15.** Procédé selon la revendication 11, selon lequel le serpentin tubulaire comprend un tube intérieur et un tube extérieur, disposés concentriquement de sorte que le tube intérieur est situé à l'intérieur du tube extérieur, et selon lequel l'étape consistant à faire circuler le courant de déchets fluides affluents dans le serpentin tubulaire comprend le fait de faire circuler le courant de déchets fluides dans le tube intérieur dans une première direction et le retour du courant de déchets fluides dans une seconde direction opposée à l'intérieur de l'anneau formé entre la périphérie extérieure du tube intérieur et la périphérie intérieure du tube extérieur de sorte que l'étape de réglage de la température donne lieu au courant fluide effluent et aux produits de la réaction.

**16.** Procédé selon la revendication 15, selon lequel la réaction chimique est exothermique et il est prévu une étape de réglage de la concentration des réactifs dans le courant de déchets fluides de telle sorte que la réaction chimique exothermique se produit lorsque le courant de déchets fluides circule dans la première direction, puis la réaction s'intensifie lorsque le courant de déchets fluides circule dans la seconde direction de manière à former le courant fluide effluent et les produits de la réaction, la chaleur produite par la réaction chimique dans le courant de déchets fluides lorsqu'il circule dans la seconde direction chauffant le courant de déchets fluides circulant dans la première direction.

**17.** Procédé selon la revendication 11, selon lequel l'un desdits réactifs est formé de déchets organiques dans un courant liquide et un autre des produits participant à la réaction est un gaz, et selon lequel le courant liquide circule dans le serpentin tubulaire à paroi mince sous une pression élevée et à une température élevée.

**18.** Procédé selon la revendication 17, selon lequel la température desdits réactifs dans ledit serpentin est maintenue entre 177°C et 316°C et la pression est maintenue dans la gamme comprise entre 8274 et 13790 kPa.

**19.** Procédé selon la revendication 17, selon lequel l'étape de circulation des réactifs dans le serpentin est réglée de telle sorte qu'un écoulement secondaire est induit dans le courant liquide de sorte que le courant liquide se déplace selon une spirale sur les surfaces intérieures du serpentin, ce qui produit un mélange intime du courant liquide et du gaz.

20. Procédé selon la revendication 11, selon lequel la réaction chimique est exothermique et selon lequel l'enceinte de retenue est essentiellement remplie par le fluide d'échange thermique et qu'il est également prévu des étapes de mise en pression de l'enceinte de retenue, de chauffage du fluide d'échange thermique à une température de démarrage suffisante pour que la réaction chimique se poursuive d'une manière autogène dans le courant de déchets fluides à l'intérieur du serpentin tubulaire, et d'extraction de chaleur à partir du fluide d'échange thermique pendant la réaction chimique autogène.

21. Procédé selon la revendication 20, selon lequel un espace pour la vapeur est prévu à l'intérieur de l'enceinte de retenue au-dessus du fluide d'échange thermique et qu'il est également prévu des étapes d'utilisation de la chaleur délivrée par la réaction exothermique pour faire bouillir le fluide d'échange thermique afin de produire une vapeur dans l'espace prévu pour la vapeur, libérer la vapeur à partir de cet espace, condenser la vapeur libérée et renvoyer la vapeur condensée à l'enceinte de retenue.

22. Procédé selon la revendication 11, selon lequel il est également prévu une étape consistant à faire circuler un courant fluide effluent et des produits de la réaction à partir du serpentin tubulaire suivant un trajet qui est en relation d'échange thermique avec le courant de déchets fluides affluents.

23. Procédé selon la revendication 11, selon lequel il est également prévu une étape d'injection de vapeur dans le serpentin tubulaire pour chauffer le serpentin à une température de démarrage avant l'étape consistant à faire circuler le courant de déchets fluides dans le serpentin pour déclencher une réaction chimique dans le courant de déchets fluides à l'intérieur du serpentin.

24. Procédé selon la revendication 11, selon lequel l'un des réactifs est un gaz et un autre réactif est liquide, le réactif gazeux est introduit dans le liquide à l'intérieur du serpentin, le débit du liquide contenant le gaz est maintenu dans le serpentin à une vitesse suffisante pour produire des bouchons sensiblement séparés et distincts de gaz et de liquide.

25. Procédé selon l'une quelconque des revendications 11 à 24, selon lequel les réactifs comprennent de l'oxygène gazeux et des déchets urbains combustibles.

26. Procédé selon l'une quelconque des revendications 11 à 25, selon lequel la réaction est conduite dans des conditions supercritiques.

*Fig-1*

*Fig-2*

*Fig-3*

_ΓFig-4_

_ΓFig-5_

_Fig-6_

_Fig-7_

_Fig-8_

_Fig-9_

_Fig-10_

_Fig-11_

_Fig-12_

_Fig-13_

_Fig-14_

_Fig-15_

_Fig-16_

_Fig-17_